(19) **Europäisches Patentamt / European Patent Office / Office européen des brevets**

(11) **EP 1 796 416 B1**

(12) **FASCICULE DE BREVET EUROPEEN**

(45) Date de publication et mention de la délivrance du brevet:
**15.10.2008 Bulletin 2008/42**

(51) Int Cl.:
*H04Q 7/38* $^{(2006.01)}$     *H04L 12/56* $^{(2006.01)}$

(21) Numéro de dépôt: **06124955.3**

(22) Date de dépôt: **28.11.2006**

(54) **Gestion d'une surcharge dans une cellule d'un réseau de radiocommunication**

Überlastungskontrolle in einer Zelle eines Funknetzes

Managing an overload in a radiocommunication network cell

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.12.2005 FR 0553778**

(43) Date de publication de la demande:
**13.06.2007 Bulletin 2007/24**

(73) Titulaire: **Alcatel Lucent 75008 Paris (FR)**

(72) Inventeurs:
• **Moinet, Grégoire**
  **94600 Choisy le Roi (FR)**
• **Blanc, Patrick**
  **92130 Issy les Moulineaux (FR)**

(74) Mandataire: **El Manouni, Josiane et al Alcatel Lucent Intellectual Property & Standards 54 rue La Boétie 75008 Paris (FR)**

(56) Documents cités:
**US-A1- 2004 132 441**

• **VIRTEJ L ET AL: "Radio resource control for GSM/EDGE radio access network (GERAN) - inter radio access technology and inter-mode procedures" VTC FALL 2001. IEEE 54TH. VEHICULAR TECHNOLOGY CONFERENCE. PROCEEDINGS. ATLANTIC CITY, NJ, OCT. 7 - 11, 2001, IEEE VEHICULAR TECHNOLGY CONFERENCE, NEW YORK, NY : IEEE, US, vol. VOL. 1 OF 4. CONF. 54, 7 octobre 2001 (2001-10-07), pages 1417-1421, XP010562195 ISBN: 0-7803-7005-8**

**Description**

## 1. DOMAINE DE L'INVENTION

Le domaine de l'invention est celui des réseaux de communication. Plus précisément, l'invention concerne les réseaux mobiles de 3ème génération (aussi appelés réseaux 3G) tels que notamment, mais non exclusivement, le GSM/GPRS (« Global System for Mobile / Global Packet Radio Service » en anglais), l'UMTS WCDMA (« Universal Mobile Telecommunications Service Wideband Code-Division Multiple Access » en anglais), l'UMTS TS-CDMA (« Universal Mobile Telecommunications Service Time Slot Code-Division Multiple Access » en anglais),...

Plus précisément encore, l'invention concerne une technique de « gestion de charge » permettant de faciliter la commutation d'une pluralité d'équipements utilisateur (téléphone mobile 3G, assistant personnel numérique (PDA),...) entre une pluralité d'états de service mise en oeuvre dans de tels réseaux.

L'invention trouve notamment des applications dans la gestion de surcharge d'une cellule.

## 2. ART ANTÉRIEUR

La norme 3GPP (« 3rd Generation Patrnership Project ») définit plusieurs états de service d'un équipement utilisateur.

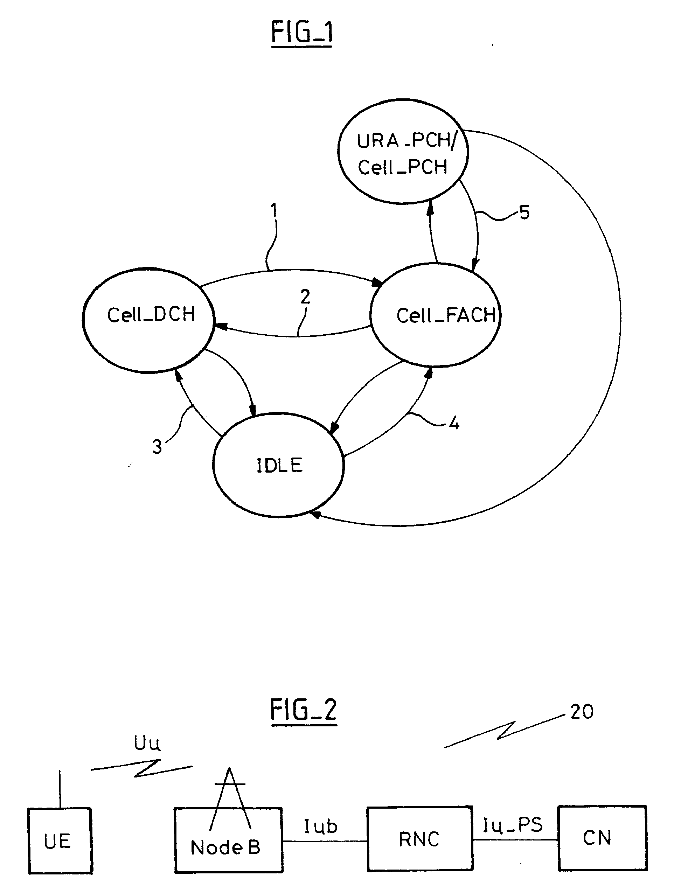

Comme illustré par la **figure 1**, un équipement utilisateur (« UE » pour « User Equipment » en anglais) peut commuter entre quatre états :

- un premier état IDLE dans lequel l'équipement utilisateur ne se voit allouer aucun contexte et/ou ressources radio dans le réseau d'accès radio ;
- un deuxième état Cell_DCH dans lequel l'équipement utilisateur se voit allouer des ressources radio dédiées (« DCH » pour « Dedicated Channel » en anglais), destinées au transfert en temps réel de grande quantité de données, dans le cadre d'un appel circuit ou un appel paquet ;
- un troisième état Cell_FACH dans lequel l'équipement utilisateur se voit allouer des ressources radio communes (« FACH » pour « Forward Access Channel » en anglais) (en d'autres termes, l'équipement utilisateur ne se voit pas allouer de ressources radio propres), destinées au transfert de données de petite taille sans contrainte temps réel, dans le cadre d'un appel paquet uniquement ; et
- un quatrième état URA_PCH/CELL_PCH dans lequel l'équipement utilisateur ne se voit allouer aucune ressource radio, mais conserve un contexte (par exemple une identité internationale d'abonné mobile (« IMSI » pour « International Mobile Subscriber Identity » en anglais)) dans le contrôleur de réseau radio (« RNC » pour « Radio Network Controller » en anglais). On rappelle que l'état URA_PCH (« UTRAN Registration Area Paging Channel » en anglais) permet d'économiser de l'énergie d'une part (libération des ressources) et de localiser l'équipement utilisateur au groupe « URA » de cellule près d'autre part.

De façon générale, le passage dans l'état Cell_FACH d'un équipement utilisateur est obtenu pour trois cas :

- un premier cas correspondant à une fin de période d'activité : l'équipement utilisateur n'a plus ou peu de données à transmettre ;
- un deuxième cas correspondant à un manque de ressources radio dans l'état Cell_DCH : l'équipement utilisateur est mis en attente dans l'état Cell_FACH jusqu'à ce que des ressources radio puissent lui être dédiées ; et
- un troisième cas correspondant à une re-sélection de cellule : l'équipement utilisateur dans une cellule donnée passe dans une autre cellule, tout en restant dans l'état Cell_FACH.

On discute ci-après les inconvénients de l'art antérieur à travers le cas particulier de l'accès d'un équipement utilisateur à un service à commutation de paquets (« Packet-Switched (PS) service » en anglais).

Dans le contexte de l'accès à des services paquets, lorsqu'un équipement utilisateur n'a plus ou peu de données à transmettre, il commute (flèche référencée 1 sur la figure 1) de l'état Cell_DCH à l'état Cell_FACH. Dans l'état Cell_FACH, l'équipement utilisateur reçoit et transmet des données sur un canal physique de contrôle commun secondaire (« SCCPCH » pour « Secondary Common Control Physical Channel » en anglais), pour lequel aucune ressource radio n'est réservée par équipement utilisateur.

Réciproquement, lorsque l'équipement utilisateur a de nouvelles données à transmettre, il commute (flèche référencée 2 sur la figure 1) de l'état Cell_FACH à l'état Cell_DCH.

Il est important de noter que le passage dans l'état Cell_DCH de l'équipement utilisateur est conditionné par la vérification d'un algorithme d'admission, par exemple de type RAC (« Radio Admission Control » en anglais), consistant à déterminer si on dispose de suffisamment de ressources radio (en terme de puissance) pour l'équipement utilisateur.

La plupart des algorithmes RAC existants sont « stricts », en ce sens qu'ils n'autorisent que très peu d'équipements utilisateur d'une même cellule à être dans un état Cell_DCH. A titre d'exemple, pour le cas d'un service paquet de 64 kbit/s en voie montante et 384 kbit/s en voie descendante, seulement trois à sept équipements utilisateur par cellule sont acceptés dans l'état Cell_DCH.

Les inventeurs ont constaté que ces algorithmes d'admission pouvaient êtres inadaptés dans certaines situations.

En effet, ils peuvent entraîner une surcharge de l'état Cell_FACH dans une cellule donnée du fait que, pour une «transition aller » (1) un grand nombre d'équipements utilisateur est autorisé à passer de l'état Cell_DCH à l'état Cell_FACH (typiquement dans le cas de consultations de pages web, dans lequel les équipements utilisateur utilisent des services paquet avec un modèle de trafic non continu), alors que pour une « transition retour » (2) seulement un nombre limité d'équipements utilisateur est autorisé à repasser de l'état Cell_FACH à l'état Cell_DCH. Ainsi, l'inconvénient de ces algorithmes est qu'ils maintiennent plus longuement les équipements utilisateur dans l'état Cell_FACH avec un débit binaire (« bit rate » en anglais) et une qualité de service (« QoS » pour « Quality of Service » en anglais) très faible, et se traduit par exemple par des temps de chargements plus longs pour les nouvelles pages web.

Aujourd'hui aucune technique de « gestion de charge » ou de gestion de qualité de service dans l'état Cell_FACH n'est définie dans la norme 3GPP.

Néanmoins, une technique bien connue permettant de faciliter le passage (2) d'un équipement utilisateur de l'état Cell_FACH à l'état Cell_DCH repose sur la limitation du nombre d'équipements utilisateur dans l'état Cell_FACH. L'avantage de cette solution est qu'elle permet d'éviter une surcharge de l'état Cell_FACH.

Cependant, cette technique connue est mal adaptée au cas des surcharges de l'état Cell_DCH. En effet, si plusieurs équipements utilisateur dans une même cellule devenaient très actifs dans le domaine de service paquet (PS) (c'est-à-dire dans le cas de téléchargements et/ou consultations des pages web (« web browsing » en anglais)), alors un nombre limité de ces équipements utilisateur passerait à l'état Cell_FACH, tandis qu'un grand nombre d'entre eux resterait bloqué dans l'état Cell_DCH, dans lequel ils consommeraient inutilement des ressources radio dédiées et empêcheraient des équipements utilisateur dans l'état IDLE de passer dans l'état Cell_DCH.

Un autre inconvénient majeur de cette solution est qu'elle ne peut pas être adaptée de façon dynamique à la situation du trafic, et de ce fait n'est pas optimale pour les réseaux 3G, dans la mesure où ces réseaux présentent en général des modèles de trafic variables.

Il existe donc un besoin d'optimisation du contrôle de la charge dans une cellule d'un réseau 3G, notamment pour faciliter la commutation d'un ou plusieurs équipements utilisateur entre les différents états de service précités.

## 3. OBJECTIFS DE L'INVENTION

L'invention a notamment pour objectif de pallier ces inconvénients de l'art antérieur. Plus précisément, un objectif de l'invention est de fournir une technique de gestion de surcharge qui soit simple et efficace à mettre en oeuvre, notamment en terme de rapidité de transition de l'état Cell_FACH à l'état Cell_DCH, c'est-à-dire permettant de minimiser les temps d'attente dans l'état Cell_FACH.

Un autre objectif de l'invention est de fournir une telle technique qui, dans un mode de réalisation particulier, facilite le passage d'un équipement utilisateur de l'état Cell_DCH à l'état Cell_FACH.

Un autre objectif de l'invention, dans au moins un mode de réalisation, est de proposer une telle technique qui permette de réduire le temps d'attente d'un équipement utilisateur pour le passage de l'état IDLE à l'état Cell_FACH ou Cell_DCH.

Un autre objectif de l'invention, dans au moins un mode de réalisation, est de proposer une telle technique qui permette de réduire le temps d'attente d'un équipement utilisateur pour le passage de l'état URA_PCH/CELL_PCH à l'état Cell_FACH.

Un autre objectif de l'invention, dans au moins un mode de réalisation, est de fournir une telle technique qui supprime, ou tout le moins limite, les risques de coupures de communication en cours (« call drops » en anglais).

L'invention a encore pour objectif de fournir une telle technique qui, dans un mode de réalisation particulier, soit notamment bien adaptée à tous les réseaux 3G existants.

L'invention a également pour objectif de fournir une telle technique qui, dans un mode de réalisation particulier, ne conduise pas à une modification lourde ou complexe des stations mobiles actuelles.

## 4. EXPOSÉ DE L'INVENTION

Ces objectifs, ainsi que d'autres qui apparaîtront par la suite, sont atteints à l'aide d'un procédé de gestion d'une surcharge dans une cellule d'un réseau de radiocommunication cellulaire comprenant une pluralité d'équipements utilisateur pouvant chacun commuter entre une pluralité d'états comprenant un état Cell_DCH et un état Cell_FACH. Selon l'invention, un tel procédé comprend les étapes suivantes, pour chaque requête d'allocation de ressources radio, appelée requête RAB, à un équipement utilisateur donné se trouvant, avant envoi de ladite requête, dans un état initial dans lequel aucune ressource radio n'est allouée audit équipement utilisateur :

- obtention pour ladite cellule d'un taux courant de transitions réussies pour le passage de l'état Cell_FACH à l'état Cell_DCH ;
- détection d'une surcharge de l'état Cell_FACH, par analyse dudit taux courant de transitions réussies ;
- si une surcharge est détectée, rejet de ladite requête ;
- si aucune surcharge n'est détectée, acceptation de ladite requête avec passage dudit équipement utilisateur dudit état initial à un état final dans lequel au moins une ressource radio est allouée audit équipement utilisateur.

Ainsi, l'invention repose sur une approche tout à fait nouvelle et inventive pour la gestion de la charge dans une cellule d'un réseau de radiocommunication. En effet, l'invention s'appuie sur le calcul d'un taux courant de transitions réussies pour le passage de l'état Cell_FACH à l'état Cell-DCH, qui n'impose donc aucune restriction fixe sur le nombre d'équipements utilisateur dans l'état Cell_FACH.

En outre, l'invention propose d'automatiser tout ou partie de l'allocation des ressources radio d'une cellule, en utilisant les informations de surcharge de l'état Cell_FACH qui sont obtenues par le traitement du taux courant de transitions réussies.

Il est à noter qu'on prévoit avantageusement de ne pas refuser le passage d'un équipement utilisateur de l'état Cell_DCH à l'état Cell_FACH, de façon à éviter d'empêcher la libération des ressources radio dédiées.

De façon avantageuse, ledit état initial est un état IDLE, et ladite étape d'acceptation comprend les étapes suivantes :

- détection d'une quantité suffisante de ressources radio pouvant être allouées de façon dédiée audit équipement utilisateur ;
- si une quantité suffisante de ressources radio est détectée, passage dudit équipement utilisateur dudit état IDLE audit état Cell_DCH;
- sinon, passage dudit équipement utilisateur dudit état IDLE audit état Cell_FACH.

De façon préférentielle, ledit état initial est un état URA_PCH/CELL_PCH, et ledit état final est l'état Cell_FACH.

Avantageusement, ladite étape d'obtention pour ladite cellule d'un taux courant de transitions réussies pour le passage de l'état Cell_FACH à l'état Cell_DCH comprend les étapes suivantes :

- détermination d'un taux de succès immédiat RiT, égal au rapport entre un nombre de transitions réussies et un nombre de transitions essayées pendant une période courante T ;
- détermination dudit taux courant de transitions réussies, noté RT, en fonction dudit taux de succès immédiat RiT et d'un taux précédent de transitions réussies noté RT-1 et obtenu à l'issue d'une période précédente T-1.

Préférentiellement, RT = $\alpha$.RiT + (1-$\alpha$).RT-1 ; avec $\alpha \in [0 ; 1]$.

Il est à noter que cette formule mathématique est généralement appelée équation de filtrage à facteur d'oubli.

De façon avantageuse, ladite étape de détection d'une surcharge de l'état Cell_FACH comprend les étapes suivantes :

- comparaison dudit taux courant de transitions réussies à un seuil déterminé;
- si ledit taux courant est inférieur audit seuil déterminé, on estime qu'une surcharge est détectée ;
- sinon, on estime qu'aucune surcharge n'est détectée.

Ainsi, il est possible pour un opérateur de réseau d'ajuster la valeur du seuil de façon à optimiser le compromis entre la qualité de service (en terme de réactivité) et la charge du réseau.

Dans un mode de réalisation avantageux de l'invention, ledit procédé comprend en outre les étapes suivantes :

- première détection d'une capacité de préemption associée audit équipement utilisateur ;
- en cas de première détection positive, deuxième détection d'une quantité suffisante de ressources radio pouvant être allouées de façon dédiée audit équipement utilisateur ;
- si une quantité suffisante de ressources radio est détectée, passage dudit équipement utilisateur dudit état IDLE audit état Cell_DCH;
- sinon, réalisation de la préemption de ressources radio pour ledit équipement utilisateur.

De façon avantageuse, ledit procédé comprend en outre les étapes suivantes, dans le cas où la préemption de ressources radio est réalisée :

- troisième détection d'une quantité suffisante de ressources radio pouvant être allouées de façon dédiée audit équipement utilisateur ;
- si une quantité suffisante de ressources radio est détectée, passage dudit équipement utilisateur dudit état IDLE audit état Cell_DCH;
- sinon :

  o obtention pour ladite cellule d'un taux courant de transitions réussies pour le passage de l'état Cell_FACH à l'état Cell-DCH ;
  o détection d'une surcharge de l'état Cell_FACH, par analyse dudit taux courant de transitions réussies ;
  o si une surcharge est détectée, rejet de ladite requête ;
  o si aucune surcharge n'est détectée, acceptation de ladite requête avec passage dudit équipement utilisateur dudit état IDLE audit état Cell_FACH

L'invention concerne également une utilisation du procédé précité, dans le cas où chaque équipement utilisateur, quand il est dans l'état Cell_DCH, utilise un canal dédié DTCH.

L'invention concerne aussi une utilisation du procédé précité, dans le cas où chaque équipement utilisateur, quand il est dans l'état Cell_DCH, utilise un canal dédié HS-DSCH.

L'invention concerne en outre un dispositif de gestion d'une surcharge dans une cellule d'un réseau de radiocommunication cellulaire comprenant une pluralité d'équipements utilisateur pouvant chacun commuter entre une pluralité d'états comprenant un état Cell_DCH et un état Cell_FACH. Selon l'invention, un tel dispositif comprend :

-   des moyens de réception d'une requête d'allocation de ressources radio, appelée requête RAB, à un équipement utilisateur donné se trouvant, avant envoi de ladite requête, dans un état initial dans lequel aucune ressource radio n'est allouée audit équipement utilisateur ;
-   des moyens d'obtention pour ladite cellule d'un taux courant de transitions réussies pour le passage de l'état Cell_FACH à l'état Cell_DCH ;
-   des moyens de détection d'une surcharge de l'état Cell-FACH, par analyse dudit taux courant de transitions réussies ;
-   des moyens de traitement de ladite requête et des moyens de commutation dudit équipement utilisateur dudit état initial à un état final dans lequel au moins une ressource radio est allouée audit équipement utilisateur, si aucune surcharge n'est détectée.

Plus généralement, le dispositif selon l'invention comprend des moyens de mise en oeuvre du procédé de gestion d'une surcharge tel que décrit précédemment (dans l'un quelconque de ses modes de réalisation).

Préférentiellement, le dispositif précité est compris dans un contrôleur de réseau radio.

L'invention concerne encore un programme informatique comprenant des instructions de code de programme pour l'exécution des étapes du procédé précité, lorsque ledit programme est exécuté dans ou par un microprocesseur.

L'invention concerne aussi un moyen de stockage, éventuellement totalement ou partiellement amovible, lisible par un ordinateur, stockant un jeu d'instructions exécutables par ledit ordinateur pour mettre en oeuvre le procédé précité.

## 5. LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

-   la figure 1, déjà commentée en relation avec l'art antérieur, présente les quatre états de service d'un équipement utilisateur de la norme 3GPP ;
-   la figure 2 présente un schéma simplifié d'un système d'accès à des services paquet selon un mode de réalisation particulier de l'invention ;
-   la figure 3 représente un organigramme d'un mode de réalisation particulier du procédé de gestion de l'invention, pour le cas d'un équipement utilisateur venant d'un état initial IDLE ; et
-   la figure 4 représente un organigramme d'un mode de réalisation particulier du procédé de gestion de l'invention, pour le cas d'un équipement utilisateur venant d'un état initial URA_PCH/CELL_PCH.

## 6. DESCRIPTION DÉTAILLÉE

La figure 2 illustre de façon schématique un mode de réalisation particulier d'un système d'accès 20 à des services paquet selon l'invention, permettant de mettre en oeuvre le procédé de gestion d'une surcharge selon un mode de réalisation particulier de l'invention.

On suppose qu'un équipement utilisateur UE dans une cellule donnée (non représentée) souhaite accéder à un ou plusieurs services 3GPP à commutation de paquets (« 3GPP Packet Services » en anglais) offerts via un réseau coeur CN (« Core Network » en anglais) relié à un contrôleur de réseau radio RNC (« Radio Network Controller » en anglais).

De façon classique, l'équipement utilisateur UE est relié à une station de base, appelée Node B (dans le cadre des réseaux 3G) (ou BTS pour « Base Transceiver Station » en anglais, dans le cadre des réseaux GSM), via une interface Uu. La station de base Node B est reliée au contrôleur de réseau radio RNC, via une interface Iub. Le contrôleur de réseau radio RNC est relié au réseau coeur CN, via une interface Iu-Ps.

Dans toute la suite de ce document, on entend par « établissement d'un RAB » (pour « Radio Access Bearer » en anglais, ou « tunnel de communication » en français) un établissement complet comprenant :

-   non seulement l'établissement d'un RAB en tant que tel (c'est-à-dire l'établissement d'un canal dédié DTCH (« Dedicated Transport Channel » en anglais) ou HS-DCH (« High Speed Downlink Shared Channel » en anglais) ;
-   mais aussi l'établissement préalable d'une connexion RRC («Radio Resource Control » en anglais).

De la même façon, on entend par « requête RAB » (aussi appelée requête d'allocation de ressources radio) une requête, transmise depuis le réseau coeur CN vers le contrôleur de réseau radio RNC, en vue de l'établissement d'un RAB au sens précité (c'est-à-dire au sens d'un établissement complet).

Une telle requête RAB est traitée par le contrôleur de réseau radio RNC.

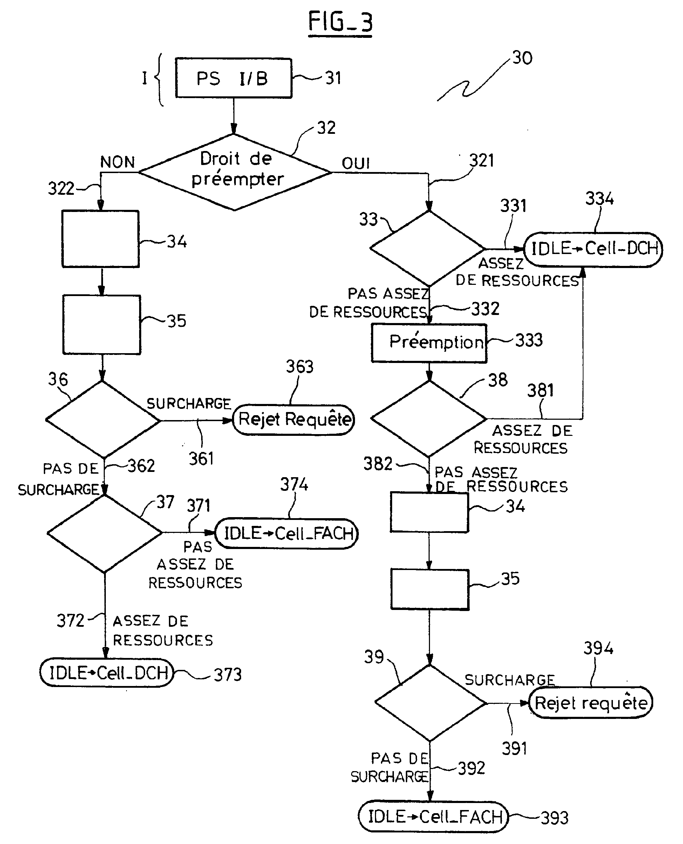

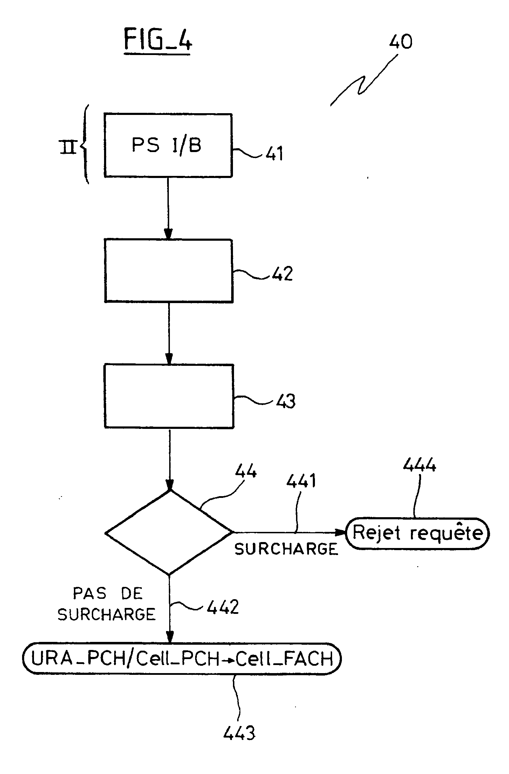

Selon un mode de réalisation particulier de l'invention, le traitement de cette requête RAB repose sur la détection d'une surcharge dans la cellule donnée, par l'analyse d'un taux courant de transitions réussies. Le traitement de la requête RAB est présenté en détail par la suite, en relation avec les figures 3 et 4, correspondant à deux états de départ (aussi appelés par la suite états initiaux) distincts de l'équipement utilisateur UE.

On décrit maintenant, en relation avec **la figure 3,** l'enchaînement successif des différentes étapes du procédé 30 selon l'invention, pour un premier mode de réalisation dans lequel un équipement utilisateur dans une cellule donnée se trouve, avant envoi de la requête RAB, dans un état IDLE.

Une phase d'identification, référencée I, comprend une première étape 31, au cours de laquelle le contrôleur de réseau radio RNC détermine la classe de service de la requête RAB, de sorte qu'en présence d'une classe de service PS Interactive/Background (« Service Paquet interactive/transfert long » en français) on passe à une étape 32, en revanche, s'il ne s'agit pas d'une classe de service PS Interactive/Background, on exécute la procédure classique d'établissement d'appel, c'est-à-dire sans faire intervenir le mécanisme selon l'invention de détection d'une surcharge dans une cellule, tel que décrit ci-dessous.

Lors de l'étape 32, le contrôleur de réseau radio RNC vérifie les droits associés à l'équipement utilisateur UE. Si une capacité de préemption associée à l'équipement utilisateur UE est détectée (321), on passe à une étape 33, sinon (322) on passe à une étape 34.

Lors de l'étape 34, on détermine un taux de succès immédiat, noté RiT, égal au rapport entre un nombre de transitions réussies et un nombre de transitions essayées pendant une période courante T.

Ensuite, lors de l'étape 35 on calcule un taux courant de transitions réussies, noté RT, en fonction du taux de succès immédiat RiT obtenu à l'étape 34 et d'un taux précédent de transitions réussies, noté RT-1, obtenu à l'issue d'une période précédente T-1.

Dans un mode de réalisation particulier de l'invention, le taux courant de transitions réussies RT est obtenu avec l'équation suivante:

$$RT = \alpha.RiT + (1-\alpha).RT\text{-}1$$

avec $\alpha \in [0; 1]$.

Lors de l'étape 36, on compare le taux courant de transitions réussies RT obtenu à l'étape 35 à un seuil déterminé, de sorte que si le taux courant RT est inférieur au seuil déterminé, alors on estime qu'une surcharge est détectée (361) ; dans le cas contraire, on estime qu'aucune surcharge n'est détectée (362) puis on passe à une étape 37.

On rappelle que lorsqu'une surcharge est détectée (361), la requête est rejetée (363), ce qui entraîne le maintien de l'équipement utilisateur UE dans l'état IDLE.

Enfin, lors de l'étape 37, le contrôleur de réseau radio RNC met en oeuvre un algorithme (par exemple du type RAC, CAC, CEAC,...) permettant de détecter si une quantité suffisante de ressources radio et de bande passante sur des interfaces peut être allouée de façon dédiée à l'équipement utilisateur UE. En cas de détection positive (372) (ressources radio et bande passante sur des interfaces dédiées suffisantes), l'équipement utilisateur UE bascule (flèche référencée 3 sur la figure 1) de l'état IDLE à l'état Cell_DCH (373) ; dans le cas contraire (371), l'équipement utilisateur UE bascule (flèche référencée 4 sur la figure 1) de l'état IDLE à l'état Cell_FACH (374).

On décrit ci-après l'enchaînement successif des différentes étapes du procédé 30 selon l'invention pour le cas où une capacité de préemption associée à l'équipement utilisateur UE est détectée à l'étape 32 précitée.

Lors de l'étape 33 (identique à l'étape 37), le contrôleur de réseau radio RNC met en oeuvre un algorithme (par exemple du type RAC, CAC, CEAC,...) permettant de détecter si une quantité suffisante de ressources radio peut être allouées de façon dédiée à l'équipement utilisateur UE. En cas de détection positive (331) (ressources radio dédiées suffisantes), l'équipement utilisateur UE (en référence à la figure 1) bascule 3 de l'état IDLE à l'état Cell_DCH (334) ; dans le cas contraire (332), on réalise la préemption de ressources radio (333) pour l'équipement utilisateur UE puis on passe à une étape 38.

Lors de l'étape 38 (identique à l'étape 37), le contrôleur de réseau radio RNC met en oeuvre un algorithme (par exemple du type RAC, CAC, CEAC,...) permettant de détecter si une quantité suffisante de ressources radio peut être allouées de façon dédiée à l'équipement utilisateur UE. En cas de détection positive (381) (ressources radio dédiées suffisantes), l'équipement utilisateur UE (en référence à la figure 1) bascule (3) de l'état IDLE à l'état Cell_DCH (334) ; dans le cas contraire (382), on réalise successivement les étapes 34 et 35 précitées, puis on passe à une étape 39.

Enfin, lors de l'étape 39, on compare le taux courant de transitions réussies RT obtenu à l'étape 35 à un seuil déterminé, de sorte que si le taux courant RT est inférieur au seuil déterminé, alors on estime qu'une surcharge est détectée (391) ; dans le cas contraire (392), l'équipement utilisateur UE (en référence à la figure 1) bascule (4) de l'état IDLE à l'état Cell_FACH (393).

On rappelle que lorsqu'une surcharge est détectée (391), la requête est rejetée (394), ce qui entraîne le maintien de l'équipement utilisateur UE dans l'état IDLE.

On décrit maintenant, en relation avec **la figure 4**, l'enchaînement successif des différentes étapes du procédé 40 selon l'invention, pour un deuxième mode de réalisation dans lequel un équipement utilisateur dans une cellule donnée se trouve, avant envoi de la requête RAB, dans un état URA_PCH/CELL_PCH.

Une phase d'identification, référencée II, comprend une première étape 41, au cours de laquelle le contrôleur de réseau radio RNC détermine la classe de service de la requête RAB, de sorte qu'en présence des classes de services « interactive » ou « transfert long » (dit « background » en anglais) on passe à une étape 42, en revanche, en présence d'un autre type de classe de service (par exemple « streaming ») on rejette la requête, c'est-à-dire qu'on maintien l'équipement utilisateur dans l'état URA_PCH/CELL_PCH.

Lors de l'étape 42 (identique à l'étape 34), on détermine un taux de succès immédiat, noté RiT, égal au rapport entre un nombre de transitions réussies et un nombre de transitions essayées pendant une période courante T.

Ensuite, lors de l'étape 43 (identique à l'étape 35) on calcule un taux courant de transitions réussies, noté RT, en fonction du taux de succès immédiat RiT obtenu à l'étape 42 et d'un taux précédent de transitions réussies, noté RT-1, obtenu à l'issue d'une période précédente T-1.

Enfin, lors de l'étape 44, on compare le taux courant de transitions réussies RT obtenu à l'étape 43 à un seuil déterminé, de sorte que si le taux courant RT est inférieur au seuil déterminé, alors on estime qu'une surcharge est détectée (441) ; dans le cas contraire (442), l'équipement utilisateur UE bascule (flèche référencée 5 sur la figure 1) de l'état URA_PCH/CELL_PCH à l'état Cell_FACH (443).

On rappelle que lorsqu'une surcharge est détectée (441), la requête est rejetée (444), ce qui entraîne le maintien de l'équipement utilisateur UE dans l'état URA_PCH/CELL_PCH.

La technique de l'invention présente de nombreux avantages, dont une liste non exhaustive est donnée ci-dessous :

- amélioration du passage de l'état Cell_FACH à l'état Cell_DCH. En effet, l'invention permet à un équipement utilisateur de ne pas être bloqué dans l'état Cell_FACH et de sortir rapidement de cet état, sans devoir repasser par l'état IDLE.
- amélioration de l'ergonomie pour la gestion de la charge d'un réseau. En effet, l'invention est basée sur la détection d'une surcharge de l'état Cell_FACH. Cette information de surcharge s'adapte automatiquement aux évolutions du réseau (variation du nombre d'équipements utilisateur sur le réseau, évolution des modèles de trafic,...).

L'invention s'applique notamment, mais non exclusivement, au cas où :

- chaque équipement utilisateur, quand il est dans l'état Cell_DCH, utilise un canal dédié DTCH ;
- chaque équipement utilisateur, quand il est dans l'état Cell_DCH, utilise un canal dédié HS-DSCH.

**Revendications**

1. Procédé (30) de gestion d'une surcharge dans une cellule d'un réseau de radiocommunication cellulaire comprenant une pluralité d'équipements utilisateur (UE) pouvant chacun commuter entre une pluralité d'états comprenant un état Cell_DCH et un état Cell_FACH,
**caractérisé en ce que** ledit procédé (30) comprend les étapes suivantes, pour chaque requête d'allocation de ressources radio, appelée requête RAB, à un équipement utilisateur (UE) donné se trouvant, avant envoi de ladite requête, dans un état initial dans lequel aucune ressource radio n'est allouée audit équipement utilisateur (UE) :

   - obtention (34, 35) pour ladite cellule d'un taux courant de transitions réussies pour le passage de l'état Cell_FACH à l'état Cell_DCH ;
   - détection (36) d'une surcharge de l'état Cell_FACH, par analyse dudit taux courant de transitions réussies ;
   - si une surcharge est détectée, rejet de ladite requête ;
   - si aucune surcharge n'est détectée, acceptation (37) de ladite requête avec passage dudit équipement utilisateur (UE) dudit état initial à un état final dans lequel au moins une ressource radio est allouée audit équipement utilisateur (UE).

2. Procédé (30) selon la revendication 1, **caractérisé en ce que** ledit état initial est un état IDLE, et **en ce que** ladite étape d'acceptation (37) comprend les étapes suivantes :

   - détection d'une quantité suffisante de ressources radio pouvant être allouées de façon dédiée audit équipement utilisateur (UE) ;
   - si une quantité suffisante de ressources radio est détectée (372), passage dudit équipement utilisateur (UE) dudit état IDLE audit état Cell_DCH (373) ;
   - sinon (371), passage dudit équipement utilisateur (UE) dudit état IDLE audit état Cell_FACH (374).

3. Procédé (30) selon la revendication 1, **caractérisé en ce que** ledit état initial est un état URA_PCH/CELL_PCH, et **en ce que** ledit état final est l'état Cell_FACH.

4. Procédé (30) selon l'une quelconque des revendications 1 à 3, **caractérisé en ce que** ladite étape d'obtention pour ladite cellule d'un taux courant de transitions réussies pour le passage de l'état Cell_FACH à l'état Cell_DCH comprend les étapes suivantes :

- détermination (34) d'un taux de succès immédiat RiT, égal au rapport entre un nombre de transitions réussies et un nombre de transitions essayées pendant une période courante T ;
- détermination (35) dudit taux courant de transitions réussies, noté RT, en fonction dudit taux de succès immédiat RiT et d'un taux précédent de transitions réussies noté RT-1 et obtenu à l'issue d'une période précédente T-1.

**5.** Procédé (30) selon la revendication 4, **caractérisé en ce que :**

$$RT = \alpha.RiT + (1-\alpha).RT-1$$

avec $\alpha \in [0 ; 1]$.

**6.** Procédé (30) selon l'une quelconque des revendications 1 à 5, **caractérisé en ce que** ladite étape de détection (36) d'une surcharge de l'état Cell_FACH comprend les étapes suivantes :

- comparaison dudit taux courant de transitions réussies à un seuil déterminé ;
- si ledit taux courant est inférieur audit seuil déterminé, on estime qu'une surcharge est détectée (361) ;
- sinon, on estime qu'aucune surcharge n'est détectée (362).

**7.** Procédé (30) selon la revendication 2, **caractérisé en ce que** ledit procédé comprend en outre les étapes suivantes :

- première détection (32) d'une capacité de préemption associée audit équipement utilisateur (UE) ;
- en cas de première détection positive (321), deuxième détection (33) d'une quantité suffisante de ressources radio pouvant être allouées de façon dédiée audit équipement utilisateur (UE) ;
- si une quantité suffisante de ressources radio est détectée (331), passage dudit équipement utilisateur (UE) dudit état IDLE audit état Cell_DCH (334) ;
- sinon (332), réalisation de la préemption de ressources radio (333) pour ledit équipement utilisateur (UE).

**8.** Procédé (30) selon la revendication 7, **caractérisé en ce que** ledit procédé comprend en outre les étapes suivantes, dans le cas où la préemption de ressources radio (333) est réalisée :

- troisième détection (38) d'une quantité suffisante de ressources radio pouvant être allouées de façon dédiée audit équipement utilisateur (UE) ;
- si une quantité suffisante de ressources radio est détectée (381), passage dudit équipement utilisateur (UE) dudit état IDLE audit état Cell_DCH (334) ;
- sinon (382) :

  ○ obtention (34, 35) pour ladite cellule d'un taux courant de transitions réussies pour le passage de l'état Cell_FACH à l'état Cell_DCH ;
  ○ détection (39) d'une surcharge de l'état Cell_FACH, par analyse dudit taux courant de transitions réussies ;
  ○ si une surcharge est détectée (391), rejet de ladite requête (394) ;
  ○ si aucune surcharge n'est détectée (392), acceptation de ladite requête avec passage dudit équipement utilisateur (UE) dudit état IDLE audit état Cell_FACH (393).

**9.** Utilisation d'un procédé de gestion d'une surcharge selon l'une quelconque des revendications 1 à 8, dans le cas où chaque équipement utilisateur (UE), quand il est dans l'état Cell_DCH, utilise un canal dédié DTCH.

**10.** Utilisation d'un procédé de gestion d'une surcharge selon l'une quelconque des revendications 1 à 8, dans le cas où chaque équipement utilisateur (UE), quand il est dans l'état Cell_DCH, utilise un canal dédié HS-DSCH.

**11.** Dispositif de gestion d'une surcharge dans une cellule d'un réseau de radiocommunication cellulaire comprenant une pluralité d'équipements utilisateur (UE) pouvant chacun commuter entre une pluralité d'états comprenant un état Cell_DCH et un état Cell_FACH, **caractérisé en ce qu'**il comprend :

- des moyens de réception d'une requête d'allocation de ressources radio, appelée requête RAB, à un équipement utilisateur (UE) donné se trouvant, avant envoi de ladite requête, dans un état initial dans lequel aucune ressource radio n'est allouée audit équipement utilisateur (UE) ;
- des moyens d'obtention pour ladite cellule d'un taux courant de transitions réussies pour le passage de l'état Cell_FACH à l'état Cell_DCH ;
- des moyens de détection d'une surcharge de l'état Cell_FACH, par analyse dudit taux courant de transitions réussies ;
- des moyens de traitement de ladite requête et des moyens de commutation dudit équipement utilisateur (UE) dudit état initial à un état final dans lequel au moins une ressource radio est allouée audit équipement utilisateur (UE), si aucune surcharge n'est détectée.

12. Dispositif selon la revendication 11, **caractérisé en ce qu'**il est compris dans un contrôleur de réseau radio (RNC).

13. Programme informatique **caractérisé en ce qu'**il comprend des instructions de code de programme pour l'exécution des étapes du procédé d'au moins une des revendications 1 à 8, lorsque ledit programme est exécuté dans ou par un microprocesseur.

14. Moyen de stockage, éventuellement totalement ou partiellement amovible, lisible par un ordinateur, stockant un jeu d'instructions exécutables par ledit ordinateur pour mettre en oeuvre le procédé d'au moins une des revendications 1 à 8.

**Claims**

1. A method (30) for managing an overload in a cell of a cellular radio communication network comprising a plurality of user equipments (UE) that may each switch between a plurality of states comprising a Cell_DCH state and a Cell_FACH state, **characterized in that** said method (30) comprises the following steps, for each radio resource allocation request, known as a RAB request, sent to a given user equipment (UE) that is set, prior to the sending of said request, to an initial state wherein no radio resources have been allocated to said user equipment (UE):

   - obtaining (34, 35), for said cell, a current rate of successful transitions from the Gell_FACH state to the Cell_DCH state;
   - detecting (36) whether there is an overload of the Cell_FACH state by analyzing said current rate of successful transitions;
   - if an overload is detected, rejecting said request;
   - if no overload is detected, accepting (37) said request and switching said user equipment (UE) from said initial state to an end state wherein at least one radio resource is allocated to said user equipment (UE).

2. A method (30) according to claim 1, **characterized in that** said initial state is an IDLE state, and **in that** said step of acceptance (37) comprises the following steps:

   - detecting whether there is a sufficient quantity of radio resources that may be allocated to said user equipment (UE) in a dedicated manner;
   - if a sufficient quantity of radio resources is detected (372), switching said user equipment (UE) from said IDLE state to said Cell_DCH state (373);
- otherwise (371), switching said user equipment (UE) from said IDLE state to said Cell_FACH state (374).

3. A method (30) according to claim 1, **characterized in that** said initial state is a URA_PCH/CELL_PCH state, and **in that** said end state is the Cell_FACH state.

4. A method (30) according to any one of the claims 1 to 3, **characterized in that** said step of obtaining a current rate of successful transitions from the Cell_FACH state to the Cell_DCH state for said cell comprises the following steps:

   - determining (34) an immediate success rate SiT, equal to the ratio between a number of successful transitions and a number of attempted transitions over a current period T;
   - determining (35) said current successful transition rate, or ST for short, based on said immediate success rate and a previous successful transition rate, or ST-1 for short, obtained at the end of a previous period T-1.

5. A method (30) according to claim 4, **characterized in that:**

$$ST = \alpha.SiT + (1-\alpha).ST\text{-}1$$

with $\alpha \in [0;1]$.

6. A method (30) according to any one of the claims 1 to 5, **characterized in that** said step of detecting (36) whether there is an overload of the Cell_FACH state comprises the following steps:

   - comparing said current rate of successful transitions to a determined threshold;
   - if said current rate is less than said determined threshold, it is assumed that an overload has been detected (361);
   - otherwise, it is assumed that no overload has been detected (362).

7. A method (30) according to claim 2, **characterized in that** said method further comprises the following steps:

   - a first detection (32) of whether there is a preemption capability associated with said user equipment (UE);
   - if this first detection is positive (321), a second detection (33) of whether there is a sufficient quantity of radio resources that may be allocated to said user equipment (UE) in a dedicated manner;

- if a sufficient quantity of radio resources is detected (331), said user equipment is switched from said IDLE state to said Cell_DCH state (334);
- otherwise (332), radio resources are preempted (333) for said user equipment (UE).

8. A method (30) according to claim 7, **characterized in that** said method further comprises the following steps, in the event that radio resources are preempted (333):

    - a third detection (38) of whether there is a sufficient quantity of radio resources that may be allocated to said user equipment (UE) in a dedicated manner;
    - if a sufficient quantity of radio resources is detected (381), said user equipment (UE) is switched from said IDLE state to said Cell_DCH state (334);
    - otherwise (382);

        ○ obtaining (34, 35) a current rate of successful transitions from the Cell_FACH state to the Cell_DCH state for said cell;
        ○ detecting (39) whether there is an overload of the Cell_FACH state, by analyzing said current rate of successful transitions from the Cell_FACH state to the Cell_DCH state.
        ○ if an overload is detected (391), rejecting said request (394);
        ○ if no overload is detected (392), accepting said request and switching said user equipment (UE) from said IDLE state to said Cell_FACH state (393).

9. The use of a method for managing an overload according to one the claims 1 to 8, wherein each user equipment (UE), when it is in the Cell_DCH state, uses a dedicated DTCH channel.

10. The use of a method for managing an overload according to one the claims 1 to 8, wherein each user equipment (UE), when it is in the Cell_DCH state, uses a dedicated, HS-DSCH channel.

11. A device for managing an overload in a cell of a cellular radio communication network comprising a plurality of user equipments (UE) that may each switch between a plurality of states comprising a Cell_DCH state and a Cell_FACH state, **characterized in that** it comprises:

- means for receiving a radio resource allocation request, known as a RAB request, sent to a given user equipment (UE) that is set, prior to the sending of said request, to an initial state wherein no radio resources have been allocated to said user equipment (HE):
- means for obtaining a current rate of successful transitions from the Cell_FACH state to the Cell_DCH state, for said cell;
- means for detecting whether there is an overload of the Cell_FACH state, by analyzing said current rate of successful transitions:
- means for processing said request and means for switching said user equipment (UE) from said initial state to an end state wherein at least one radio resource is allocated to said user equipment, if no overload is detected.

12. A device according to claim 11, **characterized in that** it is comprised within a radio network controller (RNC).

13. A computer program **characterized in that** it comprises programming code and instructions for executing the steps of the method of at least one of the claims 1 to 8, whenever said program is executed in or by a microprocessor.

14. A storage means, potentially one that is fully or partially removable, which is computer-readable and stores a set of instructions that may be at executed by said computer in order to implement the method of at least one of the claims 1 to 8.

**Patentansprüche**

1. Verfahren (30) zur Kontrolle einer Überlastung in einer Zelle eines zellulären Funknetzes, welches eine Vielzahl von Nutzerausrüstungen (UE) umfasst, von denen eine jede fähig ist, zwischen einer Vielzahl von Zuständen, die einen Cell_DCH-Status und einen Cell_FACH-Status umfassen, zu schalten, **dadurch gekennzeichnet, dass** das besagte Verfahren (30) für jede Anfrage für die Zuteilung von Funkbetriebsmitteln, die sogenannt RAB-Anfrage, an eine gegebene Nutzerausrüstung (UE), welche sich vor Senden der besagten Anfrage in einem ursprünglichen Zustand befindet, in welchem der besagten Nutzerausrüstung (UE) kein Funkbetriebsmittel zugeteilt ist, die folgenden Schritte umfasst:

    - Erreichen (34, 35) für die besagte Zelle einer momentanen Rate von erfolgreichen Übergängen für den Übergang vom Gell_FACH~Status auf den Cell_DCH~Status;
    - Detektion (36) einer Überlastung des Cell_FACH-Status anhand der Analyse der besagten momentanen Rate von erfolgreichen Übergängen;

- Wenn eine Überlastung detektiert wird, Verwerfen der besagten Anfrage;
- Wenn keine Überlastung detektiert wird, Akzeptieren (37) der besagten Anfrage mit Übergang der besagten Nutzerausrüstung (UE) von dem besagten ursprünglichen Zustand auf einen Endzustand, in welchem mindestens ein Funkbetriebsmittel der besagten Nutzerausrüstung (UE) zugeteilt wird.

2. Verfahren (30) nach Anspruch 1, **dadurch gekennzeichnet, dass** der besagte ursprüngliche Zustand ein IDLE-Status ist, und **dadurch**, dass der besagte Akzeptierungsschritt (37) die folgenden Schritte umfasst:

    - Detektion einer ausreichenden Menge von Funkbetriebsmitteln, welche der Nutzerausrüstung (UE) auf dedizierte Weise zugeteilt werden können;
    - Wenn eine ausreichende Menge von Funkbetriebsmitteln detektiert (372) wird, Übergang der besagten Nutzerausrüstung (UE) von dem besagten IDLE-Status auf den besagten Cell_DCH-Status (373);
    - Anderenfalls (371) Übergang der besagten Nutzerausrüstung (UE) von dem besagten IDLE-Status auf den besagten Cell_FACH-Status (374).

3. Verfahren (30) nach Anspruch 1, **dadurch gekennzeichnet, dass** der besagte ursprüngliche Zustand ein URA_PCH/Cell_PCH-Status ist, und dass der besagte Endzustand der Cell_FACH-Status ist.

4. Verfahren (30) nach einem beliebigen der Ansprüche 1 bis 3, **dadurch gekennzeichnet, dass** die besagten Schritt des Erreichens, für die besagte Zelle, einer momentanen Rate von erfolgreichen Übergängen für den Übergang von dem Cell-FACH-Status auf den Cell-DCH-Status die folgenden Schritte umfasst:

    - Ermittlung (34) einer Rate des sofortigen Erfolgs RiT, welche dem Verhältnis zwischen einer Anzahl von erfolgreichen Übergängen und einer Anzahl von versuchten Übergängen während einer momentanen Periode T entspricht;
    - Ermittlung (35) des besagten momentanen Rate von erfolgreichen Übergängen, mit RT notiert, entsprechend der besagten Rate des sofortigen Erfolgs RiT und einer vorherigen Rate von erfolgreichen Übergängen, mit RT-1 notiert, welche nach einer vorherigen Periode T-1 erzielt wurde.

5. Verfahren (30) nach Anspruch 4, **dadurch gekennzeichnet, dass:**

$$RT = \alpha.RiT + (1-\alpha).RT\text{-}1$$

wobei $\alpha \in [0 ; 1]$.

6. Verfahren (30) nach einem beliebigen der Ansprüche 1 bis 5, **dadurch gekennzeichnet, dass** der besagte Schritt der Detektion (36) einer Überlastung des, Cell-FACH-Status die folgenden Schritte umfasst:

    - Vergleichen der besagten momentanen Rate von erfolgreichen Übergängen mit einem festgelegten Schwellwert;
    - Wenn die besagte momentane Rate niedriger ist als der besagte festgelegte Schwellwert, nimmt man an, dass eine Überlastung detektiert wurde (361);
    - Anderenfalls nimmt man an, dass keine Überlastung detektiert wurde (362).

7. Verfahren (30) nach Anspruch 2, **dadurch gekennzeichnet, dass** das besagte Verfahren weiterhin die folgenden Schritte umfasst:

    - Erste Detektion (32) einer der besagten Nutzerausrüstung (UE) zugeordneten Bevorrechtigungskapazität;
    - Im Fall einer positiven ersten Detektion (321), zweite Detektion (33) einer ausreichenden Menge von Funkbetriebsmitteln, welche der besagten Nutzerausrüstung (UE) auf dedizierte Weise zugeteilt werden können;
    - Wenn eine ausreichende Menge von Funkbetriebsmitteln detektiert (331) wird, Übergang der besagten Nutzerausrüstung (UE) von dem besagten IDLE-Status auf den besagten Cell_DCH-Status (334);
    - Anderenfalls (332) Ausführen der Bevorrechtigung von Funkbetriebsmitteln (333) für die Nutzerausrüstung.

8. Verfahren (30) nach Anspruch 7, **dadurch gekennzeichnet, dass** das besagte Verfahren weiterhin die folgenden Schritte umfasst, wenn die Bevorrechtigung von Funkbetriebsmitteln (333) durchgeführt wird:

    - Dritte Detektion (38) einer ausreichenden Menge von Funkbetriebsmitteln, welche der besagten Nutzerausrüstung (UE) auf dedizierte Weise zugeteilt werden können;
    - Wenn eine ausreichende Menge von Funkbetriebsmitteln detektiert (381) wird, Übergang der besagten Nutzerausrüstung (UE) von dem besagten IDLE-Status auf den besagten Cell_DCH-Status (334);
- Anderenfalls (382):

○ Erreichen (34, 35) für die besagte Zelle einer momentanen Rate von erfolgreichen Übergängen für den Übergang von dem Cell_FACH-Status auf den Cell_DCH-Status;
○ Detektion (39) einer Überlastung des Cell_FACH-Status anhand der Analyse der besagten momentanen Rate von erfolgreichen Übergängen;
○ Wenn eine Überlastung delektiert wird (391), Verwerfen der besagten Anfrage (394);
○ Wenn keine Überlastung detektiert wird (392), Akzeptieren der besagten Anfrage mit Übergang der besagten Nutzerausrüstung (UE) von dem besagten IDLE-Status auf den besagten Cell_FACH-Status (393).

9. Anwenden eines Verfahrens zur Kontrolle einer Überlastung nach einem beliebigen der Ansprüche 1 bis 8, wenn jede Nutzerausrüstung (UE), wenn sie sich im Cell_DCH-Status befindet, einen dedizierten DTCH-Kanal benutzt.

10. Anwenden eines Verfahrens zur Kontrolle einer Überlastung nach einem beliebigen der Ansprüche 1 bis 8, wenn jede Nutzerausrüstung (UE), wenn sie sich im Cell_DCH-Status befindet, einen dedizierten HS-DSCH-Kanal benutzt.

11. Vorrichtung zur Kontrolle einer Überlastung in einer Zelle eines zellulären Funknetzes, welches eine Vielzahl von Nutzerausrüstungen (UE) umfasst, von denen eine jede fähig ist, zwischen einer Vielzahl von Zuständen, die einen Cell_DCH~Status und einen Cell_FACH~Status umfassen, zu schalten, **dadurch gekennzeichnet, dass** sie umfasst:

- Mittel für den Empfang einer Anfrage für die Zuteilung von Funkbetriebsmitteln, der sogenannten RAB-Anfrage, an eine gegebene Nutzerausrüstung (UE), welche sich vor Senden der besagten Anfrage in einem ursprünglichen Zustand befindet, in welchem der besagten Nutzerausrüstung (UE) kein Funkbetriebsmittel zugeteilt ist:
- Mittel zum Erreichen, für die besagte Zelle, einer momentanen Rate von erfolgreichen Übergängen für den Übergang vom Cell_FACH-Status auf den Cell_DCH-Status;
- Mittel zur Detektion einer Überlastung des Cell_FACH-Status anhand der Analyse der besagten momentanen Rate von erfolgreichen Übergängen;
- Mittel zur Verarbeitung der besagten Anfrage und Mittel zum Schalten der besagten Nutzerausrüstung (UE) von dem besagten ursprünglichen Zustand in einen Endzustand, in welchem mindestens ein Funkbetriebsmittel der besagten Nutzerausrüstung (UE) zugeordnet ist, wenn keine Überlastung detektiert wird.

12. Vorrichtung nach Anspruch 11, **dadurch gekennzeichnet, dass** sie in einer Funknetz-Steuereinrichtung (RNC) enthalten ist.

13. Informatik-Programm, **dadurch gekennzeichnet, dass** es Programmcode-Befehle zur Ausführung der Schritte des Verfahrens nach mindestens einem der Ansprüche 1 bis 8 umfasst, wenn das besagte Programm in einem oder durch einen Mikroprozessor ausgeführt wird.

14. Speichermittel, eventuell komplett oder teilweise veränderbar, von einem Computer lesbar, welches einen Satz von von dem besagten Computer ausführbaren Befehle zum Anwenden des Verfahrens nach mindestens einem der Ansprüche 1 bis 8 speichert.

## FIG_1

## FIG_2

## FIG_3

```
                    I { [  PS  I/B  ]—31              30

                         ╱‾‾‾‾‾‾‾╲
              NON        ╱ Droit de ╲        OUI
         322 ╱──────────<  préempter  >──────────╲ 321
            │            ╲           ╱            │
            ▼             ╲_____╱             ▼
         [        ]                          ╱‾‾‾‾‾‾╲          ASSEZ        ╭──────────────╮
         [    ]—34                       33 ╱   33   ╲─────────────────────>│ IDLE→Cell-DCH │—334
         [        ]                         ╲        ╱      331   DE RESSOURCES╰──────────────╯
            │                                ╲_____╱
            ▼
         [        ]                       PAS ASSEZ
         [    ]—35                       DE RESSOURCES—332
         [        ]                           │
            │                                 ▼
            ▼                            [ Préemption ]—333
         ╱‾‾‾‾‾‾╲     SURCHARGE          ╭──────────────╮
      36╱        ╲──────────────────────>│ Rejet Requête│
        ╲        ╱                       ╰──────────────╯ 363
         ╲_____╱           361
            │
         PAS DE   362
         SURCHARGE
            ▼
         ╱‾‾‾‾‾╲  371     374
      37╱       ╲─────PAS──╮  ╭────────────────╮
        ╲       ╱          │  │ IDLE→Cell_FACH │
         ╲_____╱        ASSEZ DE ╰────────────────╯
            │           RESSOURCES
         372
         ASSEZ DE
         RESSOURCES
            ▼
      ╭──────────────╮
      │ IDLE→Cell-DCH │—373
      ╰──────────────╯
```

IDLE→Cell-DCH — 334

PAS ASSEZ DE RESSOURCES — 332

Préemption — 333

38   381

ASSEZ DE RESSOURCES

382   PAS ASSEZ DE RESSOURCES

34

35

39

SURCHARGE   394

Rejet requête

391

PAS DE SURCHARGE — 392

IDLE→Cell_FACH — 393

## FIG_4

40

II { PS I/B ~41

~42

~43

44 441 444

SURCHARGE → ( Rejet requête )

PAS DE
SURCHARGE ~442

( URA_PCH/Cell_PCH→Cell_FACH )

443